Europäisches Patentamt

European Patent Office

Office européen des brevets

(19)

(11) **EP 1 231 460 B1**

(12) **EUROPEAN PATENT SPECIFICATION**

(45) Date of publication and mention
of the grant of the patent:
**08.06.2005 Bulletin 2005/23**

(51) Int Cl.⁷: **G01M 11/02**

(21) Application number: **02000794.4**

(22) Date of filing: **14.01.2002**

(54) **Lens meter for measuring properties of a spectacle lens or a contact lens**

Linsenmesser zur Messung der Eigenschaft eines Brillenglases oder einer Kontaktlinse

Mesureur de lentille pour mesurer les propriétés d'un verre de lunettes ou d'une lentille de contact

(84) Designated Contracting States:
**AT BE CH CY DE DK ES FI FR GB GR IE IT LI LU MC NL PT SE TR**

(30) Priority: **09.02.2001 JP 2001033936**

(43) Date of publication of application:
**14.08.2002 Bulletin 2002/33**

(73) Proprietor: **HOYA CORPORATION**
**Shinjyu-ku, Tokyo 161-8525 (JP)**

(72) Inventors:
• **Akiyama, Hisanori**
**Shinjyuku-ku, Tokyo, 161-8525 (JP)**

• **Jinbo, Masahiro**
**Shinjyuku-ku, Tokyo, 161-8525 (JP)**
• **Yoda, Toshiro**
**Shinjyuku-ku, Tokyo, 161-8525 (JP)**

(74) Representative: **KUHNEN & WACKER**
**Patent- und Rechtsanwaltsbüro**
**Prinz-Ludwig-Strasse 40A**
**85354 Freising (DE)**

(56) References cited:
| | |
|---|---|
| **EP-A- 0 922 999** | **US-A- 4 707 090** |
| **US-A- 4 806 774** | **US-A- 5 331 394** |
| **US-A- 5 340 992** | **US-A- 5 583 609** |
| **US-A- 5 825 476** | **US-B1- 6 236 453** |

## Description

Field of the Invention

The present invention relates to a lens meter for measuring properties of a spectacle lens or a contact lens according to claim 1.

Prior Art

When properties of a lens is measured by a manual lens meter, the plane of focusing an image is obtained by visual observation or by an observation using an apparatus. Relative positions of elements in the optical system including the lens for examination along the optical axis and the distance between the lens for examination and the optical system having a light source are changed and the focal length is derived from the distance of the movement of the elements required for obtaining the plane of focusing an image and the distance between the lens for examination and the optical system having the light source. However, obtaining the plane of focusing an image by visual observation has a drawback in that the error in the measurement tends to increase due to differences in the result depending on individual persons.

To overcome the above drawback of the manual lens meter, automatic lens meters have been proposed as described in Japanese Patent Application Laid-Open Nos. Showa 49(1974)-122355, Showa 60(1985)-17335 and Heisei 8(1996)-20334. An automatic lens meter described in Patent Application Laid-Open No. Showa 49(1974)-122355 comprises a lens for examination fixed in a manner such that the optical center of the lens for examination is placed on the optical axis of a collimator for sending light and a collimator for receiving light, an optical system for taking an image which has a photoelectric converter disposed on a focusing plane along the extension of the above optical axis, an electric circuit which arranges luminance signals of a target image decomposed by scanning lines of the photoelectric converter and calculates the position where the time width area of the electric luminance signal between one way of the movement and the other way of the movement of the optical system having a light source is minimized, and a circuit automatically controlling the reciprocal movement of the optical system having a light source synchronously with the above electric circuit by a pulse motor and a signal generator for driving the pulse motor. The position where the image of the target has the smallest area is converted into a signal expressed as the diopter.

In an automatic lens meters, including the automatic lens meters described in Japanese Patent Application Laid-Open Nos. Showa 49(1974)-122355 and Showa 60(1985)-17335, it is necessary that a means for detecting the best position and a mechanism for moving the target must be disposed. Therefore, an improvement is made so that the refractive index, the angle of the axis and the prism values of the lens for examination can be measured by treatments of signals of an image sensor disposed on the focusing plane of an image-forming lens without moving a slit pattern. The construction is simplified in the automatic lens meter described in Japanese Patent Application Laid-Open No. Heisei 8(1996)-20334.

In the automatic lens meter described in Japanese Patent Application Laid-Open No. Showa 60(1985)-17335, the rays for the measurement is divided into two group of rays at the back of the object lens for receiving rays. The distance of decentering of the rays of the measurement by the lens for examination is detected by two image sensors and the refractive power is derived by calculation of the obtained data. Since the rays of the measurement after passing the lens for examination is divided into two groups of rays which are a group of rays in the X-direction and a group of rays in the Y-direction and sent to the image sensors, the amount of the light signal sent to each image sensor decreases to a half or less of the original amount of the signal. Therefore, a special electric treatment for increasing the S/N ratio is necessary and the electric circuits become complicated and expensive.

Moreover, since a beam splitter for dividing the rays and the two image sensors have to be disposed, it is inevitable that the path of rays, the two image sensors and portions for disposing these components make the apparatus complicated and expensive.

In the automatic lens meter described in Japanese Patent Application Laid-Open No. Heisei 8(1996)-20334, the distances of decentering of the measuring rays by the lens for examination in the X-direction and in the Y-direction are detected by a single image sensor placed at a back position of the object lens for receiving rays and the refractive power is derived by calculation of the obtained data. A slip pattern having a shape of N is used for the measurement. Therefore, a portion placed oblique with respect to the image sensor is used for detection in the Y-direction and this causes a problem in that the accuracy of the information on the position decreases.

US-A-5 331 394 discloses an automated lensometer with an array of point light sources.

Summary of the invention

The present invention has been made to overcome the above problems and it is an object of the present invention to provide an automatic lens meter having a simple structure and exhibiting a high accuracy of measurement.

This object is solved by the features of claim 1.

Improved embodiments of the invention result from the subclaims.

The present invention provides:

an automatic lens meter comprising an optical system in which a pattern image is formed by projection of a pattern created in a pattern creating member and measuring optical properties of a lens for examination based on information on displacement of the pattern image from a position in absence of the lens for examination in a path of rays in the optical system to the position in presence of a lens for examination in the path of rays, the automatic lens meter comprising:

a plurality of light sources arranged at positions separated from an optical axis of the optical system by a same distance on a plane perpendicular to the optical axis,

a light transfer lens which is disposed in a manner such that an optical axis thereof is a same as the optical axis of the optical system and arranges rays from the light sources into parallel rays,

a measurement table on which the lens for examination is disposed in a path of rays from the light transfer lens,

a collimator lens through which rays from the light transfer lens pass and form images of the plurality of light sources on the lens for examination disposed on the measurement table,

the pattern creating member being disposed between the light transfer lens and the collimator lens,

an object lens for receiving rays which forms the pattern image of the pattern created by the pattern creating member on a specific pattern image forming plane, and

line sensors arranged on the pattern image forming plane; wherein:

the pattern image is formed as a tetragonal shape on the pattern image forming plane from the pattern created in the pattern creating member,

the line sensors are arranged so as to intersect four sides of the tetragonal shape of the pattern image on a same plane as the pattern image forming plane, and

the information on displacement of the pattern image is derived from information on positions of intersections of the line sensors and the four sides of the tetragonal shape of the pattern image.

Brief description of the drawings

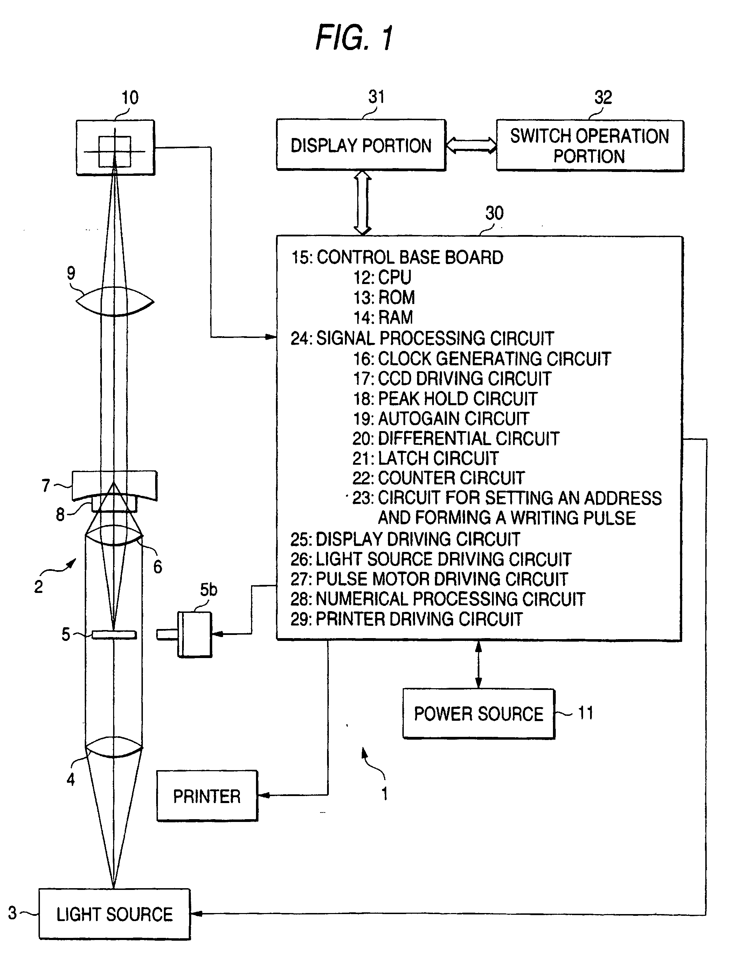

Fig. 1 shows a system block diagram of the lens meter as an embodiment of the present invention;

Fig. 2 shows a front view of light sources;

Fig. 3 shows a front view of a pattern creating member;

Fig. 4 shows a diagram exhibiting a construction of an image sensor;

Fig. 5 shows a diagram exhibiting images of light sources formed on the lens for examination;

Fig. 6 shows a diagram describing detection of the position of a pattern image formed on a pattern image forming plane in the image sensor by line sensors;

Fig. 7 shows a diagram exhibiting analysis of a prism formed by a spherical surface;

Fig. 8 shows a diagram exhibiting analysis of a prism formed by a cylindrical surface;

Fig. 9 shows a diagram exhibiting pitches of an image of a light source formed on the lens for examination;

Fig. 10 shows a diagram exhibiting pitches of an image of a light source formed on the lens for examination;

Fig. 11 shows an electric circuit of a lens meter as an embodiment of the present invention;

Fig. 12 shows a diagram exhibiting the advantage of the embodiment;

Fig. 13 shows a diagram exhibiting the advantage of the embodiment;

Fig. 14 shows a diagram exhibiting the advantage of the embodiment;

Fig. 15 shows a diagram exhibiting the advantage of the embodiment;

Fig. 16 shows a diagram exhibiting the advantage of the embodiment;

Fig. 17 shows a diagram exhibiting another embodiment of the present invention;

Fig. 18 shows a diagram exhibiting another embodiment of the present invention;

Fig. 19 shows a diagram exhibiting another embodiment of the present invention.

Fig. 20 shows a diagram exhibiting another embodiment of the present invention; and

Fig. 21 shows a diagram exhibiting another embodiment of the present invention.

The lens meter as an embodiment of the present invention will be described with reference to the above Figures in the following.

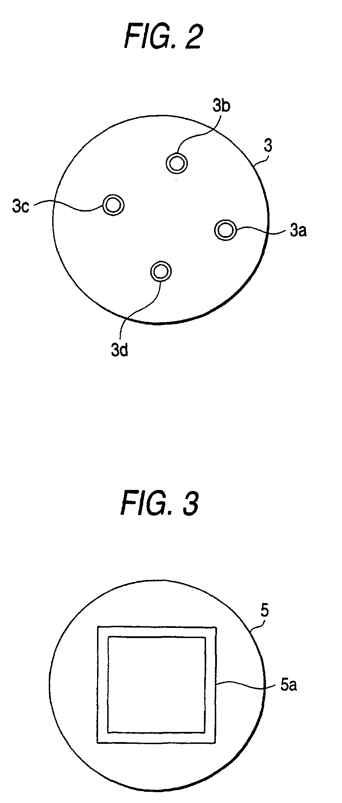

An optical system 2 will be described first. Light sources 3 comprise four high luminance light emitting diodes (LED) 3a, 3b, 3c and 3d and are used as light sources of a lens meter 1. As shown in Figure 2, it is necessary that the four LEDs be disposed at apices of a square having the center on the optical axis and separated from the adjacent LED by the same distance so that the calculation described later is simplified. 4 means a light transfer lens which arranges rays emitted from each LED into parallel rays. In other words, the light sources 3 are disposed at the focal point of the light transfer lens 4.

5 means a pattern creating member which creates a slit pattern. As shown in Fig. 3, a square slit pattern 5a is formed on the pattern creating member 5. The pattern creating member can move between the light transfer lens 4 and a collimator lens 6. 6 means a collimator lens playing two roles, one of which is to create images of the light sources on the lens for examination 7 and the other of which is to arrange bundles of rays forming an image of the slit pattern 5a into parallel rays in combination with the lens for examination 7.

8 means a measurement table which is adjusted so that the lens for examination 7 is disposed on the same plane as the plane of the four images of the light source. 9 means an object lens which focuses the parallel rays arranged by the collimator lens 6 and the lens for examination 7 and forms an image of the slit pattern 5a. 10 means an image sensor. The image sensor 10 is disposed at the focal position of the object lens 9 and detects the position of the pattern image as described later.

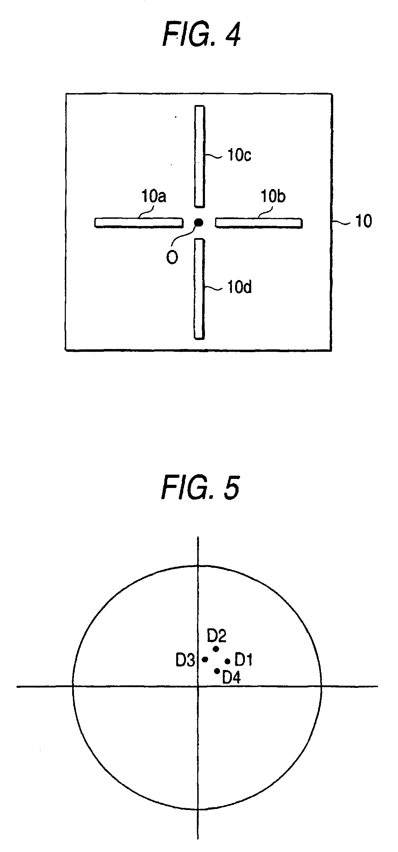

Fig. 4 shows a diagram exhibiting the image sensor 10. As shown in Fig. 4, the image sensor 10 has four line sensors (CCD) 10a, 10b, 10c and 10d arranged in a shape of an approximate cross on the pattern image forming plane of the image sensor 10. The line sensors 10a, 10b, 10c and 10d are one-dimensional sensors for detecting a position. Each line sensor detects the position in the longitudinal direction at which the line sensor intersects the outline of the pattern image which is formed on the pattern image forming plane of the image sensor. The detected position shows the position of the outline of the patter image. For example, when the pattern image is formed with a bright thick line in a dark back ground, there are two interfaces of the bright portion and the dark portion at the intersection of the line sensor and the bright line of the outline. Therefore, the position of the intersection of the outline of the pattern image and the line sensor can be derived with excellent accuracy by detecting the positions of the two interfaces and obtaining the middle point of the obtained two positions.

The rays emitted from the light sources comprising the four LEDs 3a, 3b, 3c and 3d pass through the light transfer lens 4, irradiate the slit pattern 5a, pass through the collimator lens 6, go into the lens for examination 7 and then reach the image sensor 10 via the object lens 9. These components are arranged in a manner such that the position of the light source and the position of the back surface of the lens for examination are optically conjugate. In other words, the rays from the four LEDs of the light sources are temporarily focused at the corresponding four positions on the back surface of the lens for examination 7 and images D1, D2, D3 and D4 are formed (see Fig. 5).

The slit pattern 5a is kept at an approximate conjugate position with respect to the position of the image sensor 10. In other words, the measurement is conducted while the conjugate relation between the slit pattern 5a and the image sensor 10 is maintained by moving the pattern creating member 5 along the optical axis by means of a pulse motor 5b under servo control in accordance with an equivalent spherical value Se of the lens for examination.

An electric processing system which performs control, detection and calculation in combination with the above optical system comprises a power source 11 in which an AC input is converted into a DC input and supplied to a control portion 30; a control base board 15 comprising CPU 12, ROM 13 and RAM 14; a signal processing circuit 24 comprising a clock generating circuit 16, a CCD driving circuit 17, a peak hold circuit 18, an autogain circuit 19, a differential circuit 20, a latch circuit 21, a counter circuit 22 and a circuit for setting an address and forming a writing pulse 23; a control portion 30 comprising a display driving circuit 25, a light source (LED) driving circuit 26, a pulse motor driving circuit 27, a numerical processing circuit 28 and a printer driving circuit 29; a display portion for a LED display or a monitor display; and an operation switch portion which is exposed to the outside and used for operations. The electric system in the control portion 30 will be described later.

A method for calculating the optical properties of the lens for examination which are the spherical dioptric power S, the cylindrical dioptric power C, the direction of the cylinder axis (AX=θ) and the amount of decentering (the prism value as the lens for examination) based on the prism amount at each of four optical points $(X_i, Y_i)$, i=1 to 4, on the lens for examination will be described in the following.

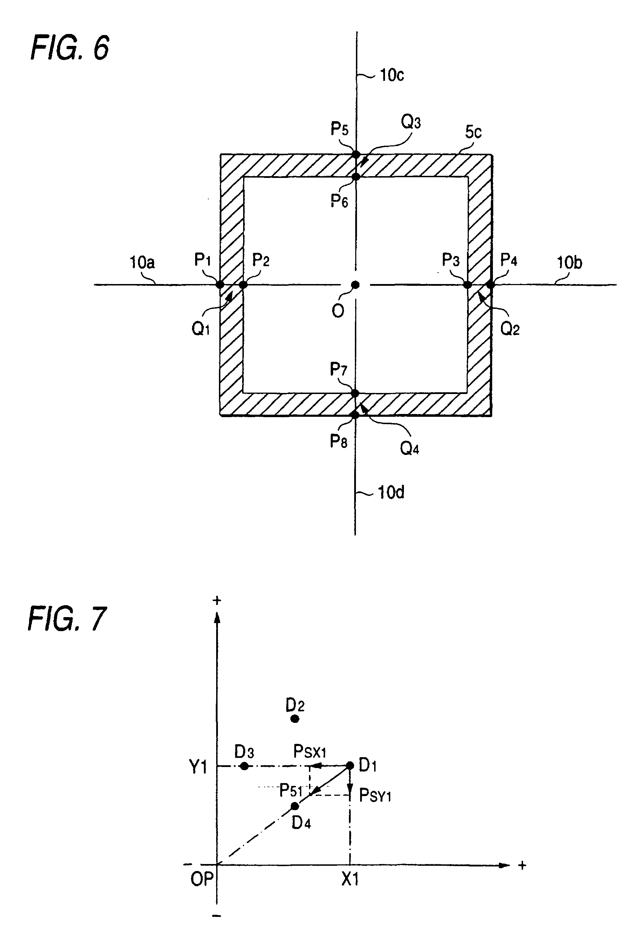

The prism amount at each of the optical points D1 to D4 is treated by separating into a portion formed by the spherical surface and a portion formed by the cylindrical surface. As shown in Fig. 7, in accordance with the Prentice's equation (the prism amount = the dioptric power (D) the amount of decentering (mm) / 10), the prism formed by the spherical surface $PS_i(PSx_i, PSy_i)$ is expressed as:

[Formula 1]

In the X-direction:

$$PSX_i = \frac{X_i}{10}S$$

In the Y-direction:

$$PSY_i = \frac{Y_i}{10}S$$

The above equations lead to the following equation:

[Formula 2]

$$PS_i = \frac{\sqrt{X_i^2 + Y_i^2}}{10}S$$

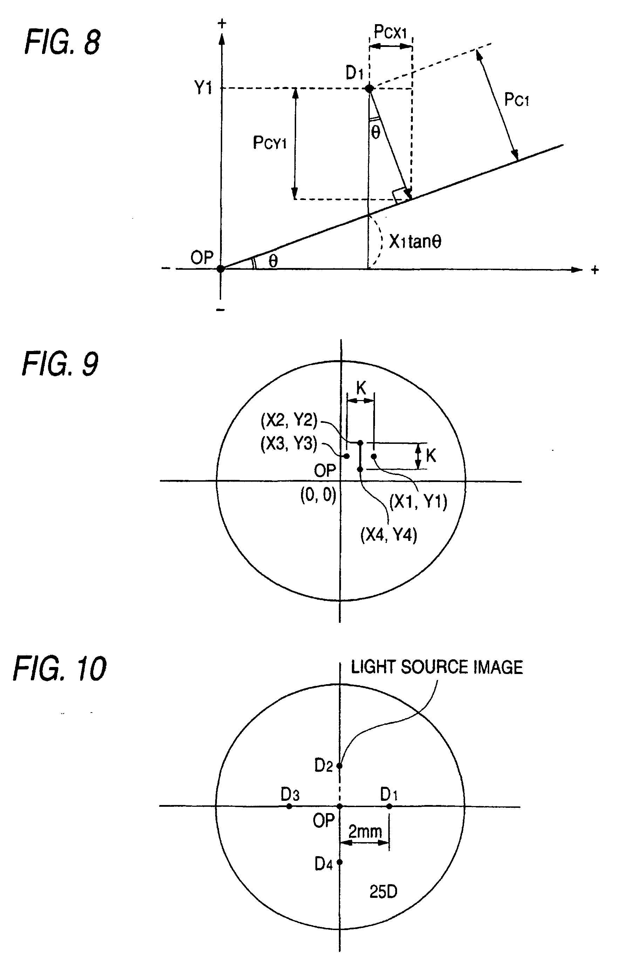

In the above equations, i=1 to 4 and $X_i$ and $Y_i$ represent the central coordinates of each point of the pattern image. With reference to the diagram shown in Fig. 8, the prism formed by the cylindrical surface $Pc_i(PcX_i, PcY_i)$ is expressed as:

[Formula 3]

$$Pc_i = \frac{(Y_i - X_i \tan\theta)\cos\theta}{10}C$$

In the X-direction:

[formula 4]

$$Pcx_i = \frac{(Y_i \cos\theta - X_i \sin\theta)}{10}C\sin\theta$$

In the Y-direction:

[Formula 5]

$$Pcy_i = \frac{(Y_i \cos\theta - X_i \sin\theta)}{10}C\cos\theta$$

A synthesized prism in the X-direction is:

[Formula 6]

$$PX_i = -\frac{X_i}{10}S + \frac{(Y_i \cos\theta - X_i \sin\theta)\sin\theta}{10}C$$

A synthesized prism in the Y-direction is:

[Formula 7]

$$PY_i = -\frac{Y_i}{10}S + \frac{(X_i \cos\theta - Y_i \sin\theta)\cos\theta}{10}C$$

The synthesized prism values in the X-direction and in the Y-direction are proportional to the displacement on the sensor. When the constant of proportion is represented by k and the prism amount is expressed as the displacement on the sensor, PXi=$kx_i$ and PYi=$ky_i$, wherein $x_i$ and $y_i$ represent the displacements on the sensor.

The synthesized prism in the X-direction is:

[Formula 8]

$$kx_i = -\frac{X_i}{10}S + \frac{(Y_i \cos\theta - X_i \sin\theta)\sin\theta}{10} \tag{1}$$

The synthesized prism in the Y-direction is:

[Formula 9]

$$ky_i = -\frac{Y_i}{10}S + \frac{(X_i \cos\theta - Y_i \sin\theta) \cos\theta}{10}C \tag{2}$$

Equations for each point (i=1 to 4) can be obtained as follows.
From Equation (1):

[Formula 10]

$$kx_1 = -\frac{X_1}{10}S + \frac{(Y_1 \cos\theta - X_1 \sin\theta)\sin\theta}{10}C$$

....

....

$$kx_4 = -\frac{X_4}{10}S + \frac{(Y_4 \cos\theta - X_4 \sin\theta)\sin\theta}{10}C$$

From Equation (2):

[Formula 11]

$$ky_1 = -\frac{Y_1}{10}S + \frac{(X_1\sin\theta - Y_1\cos\theta)\cos\theta}{10}C$$

....

....

$$ky_4 = -\frac{Y_4}{10}S + \frac{(X_4 \sin\theta - Y_4 \cos\theta)\cos\theta}{10}C$$

The above equations can be converted as follows.
From Equation (1):

[Formula 12]

$$k(x_1 - x_3) = \frac{(X_1 - X_3)}{10}S$$

$$+ \frac{\{(Y_1 - Y_3)\cos\theta - (X_1 - X_3)\sin\theta\}}{10} C \sin\theta \qquad (3)$$

$$k(x_2 - x_4) = \frac{(X_2 - X_4)}{10} S$$

$$+ \frac{\{(Y_2 - Y_4)\cos\theta - (X_2 - X_4)\sin\theta\}}{10} C \sin\theta \qquad (4)$$

From Equation (2):

[Formula 13]

$$k(y_1 - y_3) = \frac{(Y_1 - Y_3)}{10} S$$

$$+ \frac{\{(X_1 - X_3)\sin\theta - (Y_1 - Y_3)\cos\theta\}}{10} C \cos\theta \qquad (5)$$

$$k(y_2 - y_4) = \frac{(Y_2 - Y_4)}{10} S$$

$$+ \frac{\{(X_2 - X_4)\sin\theta - (Y_2 - Y_4)\cos\theta\}}{10} C \cos\theta \qquad (6)$$

The pitch distances of the images of the light sources on the lens for examination are defined as shown in Fig. 9. When coordinates having OP (the optical center of the lens for examination) at (0,0) is used, the following can be obtained:

$X_1$-$X_3$=K, $Y_1$-$Y_3$=0, $X_2$-$X_4$=0 and $Y_2$-$Y_4$=K. Therefore, by utilizing the equations shown above, equations (3), (4), (5) and (6) can be simplified as follows:

[Formula 14]

$$(3) \qquad k(x_1 - x_3) = \frac{K}{10} S - \frac{KC \sin^2\theta}{10} \qquad (7)$$

$$(4) \qquad k(x_2 - x_4) = \frac{KC \sin^2\theta}{20} \qquad (8)$$

$$(5) \qquad k(y_1 - y_3) = \frac{KC \sin^2\theta}{20} \qquad (9)$$

$$(6) \qquad k(y_2 - y_4) = \frac{K}{10} S - \frac{KC \cos^2\theta}{10} \qquad (10)$$

From Equations (7), (8), (9) and (10), Equations (11), (12) and (13) can be obtained:

[Formula 15]

$$S + \frac{C}{2} = -\frac{5k}{K}(x_1 - x_2 + y_2 - y_4) = \alpha \tag{11}$$

$$C\cos 2\theta = -\frac{10k}{K}(-x_1 + x_3 + y_2 - y_4) = \beta \tag{12}$$

$$C\sin 2\theta = -\frac{10k}{K}(-x_2 + x_4 - y_1 + y_3) = \gamma \tag{13}$$

From Equations (11), (12) and (13), the spherical dioptric power S, the cylindrical dioptric power C and the cylindrical axis Ax can be obtained as follows:

[Formula 16]

$$S = \alpha - \frac{\sqrt{\beta^2 + \gamma^2}}{2}$$

$$C = \sqrt{\beta^2 + \gamma^2} \qquad (C: \text{positive})$$

$$Ax = \frac{1}{2}\tan^{-1}\frac{\gamma}{\beta} \qquad (\beta > 0,\ \gamma > 0)$$

$$Ax = \frac{1}{2}\tan^{-1}\frac{\gamma}{\beta} + 90° \qquad (\beta < 0)$$

$$Ax = \frac{1}{2}\tan^{-1}\frac{\gamma}{\beta} + 180° \qquad (\beta > 0,\ \gamma \le 0)$$

$$Ax = 45° \qquad (\beta = 0,\ \gamma > 0)$$

$$Ax = 135° \qquad (\beta = 0,\ \gamma > 0)$$

The prism values as the amount of decentering in the lens layout of the lens for examination can be derived as follows. When the x-component and the y-component of the prism value are represented by Px and Py, respectively, these components are given by:

[Formula 17]

$$Px = \frac{k}{4}\sum_{i=1}^{4} xi = \frac{k}{4}(x_1 + x_2 + x_3 + x_4)$$

$$Py = \frac{k}{4}\sum_{i=1}^{4} yi = \frac{k}{4}(y_1 + y_2 + y_3 + y_4)$$

$$P = \sqrt{Px^2 + Py^2}$$

[Formula 18]

$$\sigma = \tan^{-1}\frac{-Py}{Px} \qquad (Px > 0,\ Py \ge 0)$$

$$\sigma = \tan^{-1}\frac{Py}{Px} + 180° \qquad (Px < 0)$$

$$\sigma = \tan^{-1}\frac{Py}{Px} + 360° \qquad (Px > 0,\ Py < 0)$$

$$\sigma = 90° \qquad (Px=0, Py>0)$$

$$\sigma = 270° \qquad (Px=0, Py<0)$$

Therefore, the optical properties of the lens for examination can be calculated from the four bundles of rays passing through the lens for examination.

The method for obtaining the central coordinates $(X_i, Y_i)$ of the pattern image by using as the image sensor 10 four line sensors 10a, 10b, 10c and 10d arranged in the shape of a cross having the center at the optical axis will be described in the following. Four images of the light sources focused on the lens for examination are represented by D1, D2, D3 and D4.

Fig. 6 shows a pattern image having a quadrangular shape which is formed on the pattern image forming plane of the image sensor when one LED is lighted. In Fig. 6, the pattern image having a quadrangular shape 5c is formed with thick bright lines in a dark background. The sides of the quadrangle of the pattern image each intersect the corresponding line sensors 10a, 10b, 10c and 10d at portions Q1, Q2, Q3 and Q4, respectively. The four line sensors 10a, 14b, 10c and 10d each detect the positions of two interfaces of the dark portion and the bright portion at the intersections Q1, Q2, Q3 and Q4, respectively. When the light source 3a (D1) is lighted, information on eight positions P1 to P8 are obtained as shown in Fig. 6. In a similar manner, when one of 10b (D2), 10c (D3) and 10d (D4) is lighted, information on eight positions corresponding to the lighted light source is obtained.

The X- and Y-coordinates of the center of a square pattern image 5c can be derived by using the eight data obtained above as follows:

[Formula 19]

$$x = \frac{Q_1 + Q_2}{2} = \frac{P_1 + P_2 + P_3 + P_4}{2}$$

$$y = \frac{Q_3 + Q_4}{2} = \frac{P_5 + P_6 + P_7 + P_8}{2}$$

In the above equations, x shows the position of the center in the horizontal direction expressed as the number of bits of the sensor and y shows the position of the center in the vertical direction expressed as the number of bits of the sensor. The position of the center can be expressed by the coordinates (X0, Y0) when the lens for examination is absent in the path of rays and by the coordinates (X1, Y1) when the lens for examination is present in the path of rays. Then, new coordinates can be formed by using X1-X0 as the X-axis and Y1-Y2 as the Y-axis. The new coordinates show the prism amount (the amount of decentering) itself in the measurement of the properties of the lens for examination.

On the other hand, equations (11), (12) and (13) and the equation of the prism amount described above in the description of the principle can be expressed as follows:

[Formula 20]

$$S + \frac{C}{2} = \frac{5k}{K}\{(x_1 - x_{01}) - (x_3 - x_{03}) + (y_2 - y_{02}) - (y_4 - y_{04})\} = \alpha \qquad (11)'$$

$$C \cos 2\theta = \frac{10k}{K}\{-(x_1 - x_{01}) + (x_3 - x_{03}) + (y_2 - y_{02}) - (y_4 - y_{04})\} = \beta \qquad (12)'$$

$$C \sin 2\theta = \frac{10k}{K}\{-(x_2 - x_{02}) + (x_4 - x_{04}) + (y_1 - y_{01}) - (y_3 - y_{03})\} = \gamma \qquad (13)'$$

$$Px = \frac{k}{4}\{(x_1 - x_{01}) + (x_2 - x_{02}) + (x_3 - x_{03}) + (x_4 - x_{04})\}$$

$$Py = \frac{k}{4}\{(y_1 - y_{01}) + (y_2 - y_{02}) + (y_3 - y_{03}) + (y_4 - y_{04})\}$$

The spherical dioptric power S, the cylindrical dioptric power C and the cylindrical axis Ax can be obtained from the equations of the spherical dioptric power S, the cylindrical dioptric power C and the cylindrical axis Ax described above by using the values of α, β and γ obtained above. Thus, the optical properties of the lens for examination can be derived from the four line sensors and the pattern image. As described above, theoretically, the optical properties can be detected by the construction of the present invention (four line sensors, four light sources as separate points and a pattern). Moreover, in the present invention, the pattern is moved under the servo-control as described above.

The movement of the pattern will be described in the following. There are two reasons for moving the pattern. One reason is related to the accuracy and the other reason is related to the effective length of the sensor and the prism amount. With respect to the accuracy, since the image of the light source focused on the lens for examination has at least some area, the pattern image on the lens for examination is blurred by the refractive effect of the lens when the dioptric power of the lens for examination increases. In other words, there is the possibility that the wave shape of the signal on the sensor is not sharp and the signal is received with difficulty.

To overcome the above drawback, the pattern is moved under a servo-control using a pulse motor and correction is made on the spherical surface. The movement of the pattern is optically designed in advance so that the amount of the movement (the distance) and the refractive power (Dioptric power) has a prescribed regularity. Therefore, the relation between these three can be described by a specific equation since the amount of the movement of the pattern can be controlled by one pulse of the pulse motor. In the actual practice, a specific amount of movement of the pattern is decided in advance based on the optical properties detected under the condition that the pattern is standing still and the movement is made based on the decided amount of movement. Concerning the optical data obtained by detection of the pattern image after the movement, it is sufficient that the correction expressed by the number of D (Dioptric power) is known.

As described above, the movement of the pattern is used as a means for decreasing blur of the pattern image on the sensor and for accurately deriving each of the eight data. As for the effective length of the sensor and the prism amount, in general, a lens meter is designed in a manner such that the measurement can be made in the range of ±25D (Dioptric power) and 5 prisms.

In the present embodiment, as shown in Fig. 10, the prism amount at the point of measurement is 5 prisms when the pitch of the point of measurement is 4 mm, the amount of decentering from PO is 2 mm and the lens for examination is a spherical lens of 25D (Dioptric power). In this case, when the pattern is not moved, the maximum distance of the movement of the pattern image is 10 prisms and the sensor is required to have a length sufficient for the measurement in this distance.

[Formula 21]

$$P = \frac{HD}{10} = \frac{2 \times 25}{10} = 5 \text{ (prism)}$$

$$P_{MAX} = 5 + 5 = 10 \text{ (prism)}$$

When the pattern is moved by the distance of the spherical dioptric power based on the data detected before the movement of the pattern, the pattern images formed by the four light sources can be concentrated into a single image. The maximum distance of movement of the resultant image is 5 prisms and it is sufficient that the sensor has a length for the measurement in this distance. In other words, when the pattern is moved, the sensor can be made shorter and the design can be made more compact.

The pattern is moved based on the reasons described above. When the pattern is moved, the equation for deriving the spherical dioptric power S is somewhat different from the equations described in the Formula 16. The equation used in the present case is as follows:

[Formula 22]

$$S = \alpha - \frac{\sqrt{\beta^2 + \gamma^2}}{2} + SE$$

wherein SE represents the spherical dioptric power corresponding to the movement of the pattern:

SE = (the spherical dioptric power corresponding to one pulse of

the pulse motor) $\times$ (the number of pulse sent to the pulse motor)

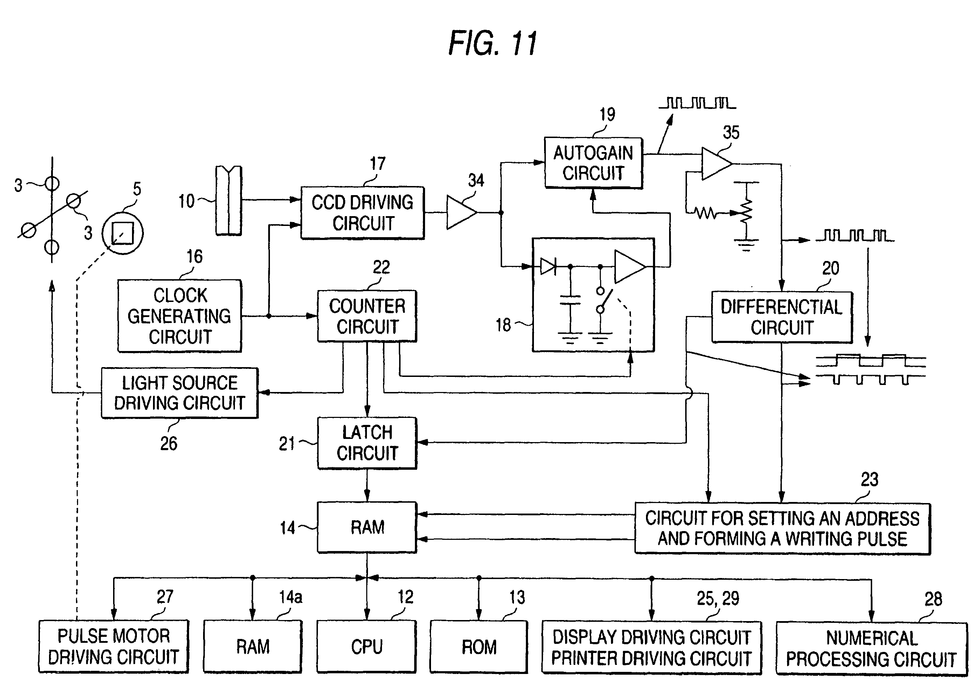

The processing of signals in the electric system of the control portion 30 of the automatic lens meter of an embodiment of the present invention will be described with reference to Fig. 11 in the following. In a signal processing circuit 24, a pulse from a clock generating circuit 16 is frequency-divided by a counter and an LED driving signal is formed. The LED driving signal is sent to the LED light sources 3 via an LED driving circuit (light source) 24 and the four LED light sources 3 (D1, D2, D3 and D4) are lighted each successively for 20 ms. More specifically, a counter circuit 22 and a CCD driving circuit 17 are activated by a reference pulse (800 KHz) generated in the clock generating circuit 16. The lighting of the LED light sources 3 and activation of other circuits are synchronized and the four LED light sources 3 which are D1 to D4 each repeat the time series action, i.e., lighting for 20 ms and extinguishing for 60 ms, under the control of the LED driving circuit 26.

The rays from the four LED light sources 3 each irradiate the pattern and reach line sensors in the image sensor 10. The rays reaching each line sensor in the image sensor 10 are separated into four groups of rays carrying four signals which are a signal for D1, a signal for D2, a signal for D3 and a signal for D4 in a time series manner. An output signal from the line sensor of the image sensor 10 passes through the CCD driving circuit 17 and an amplifier 34 and reaches a peak hold circuit 18 and an autogain circuit 19. In the peak hold circuit 18, a dummy signal (a light signal for 5 ms) generated by lighting D1 is held and output to the autogain circuit 19. When the amount of the light is small, the peak value is small and, when the amount of the light is great, the peak value is great.

The degree of amplification in the autogain circuit 19 is controlled based on the dummy signal input into the autogain circuit 19. When the amount of light is small, the degree of amplification (gain) is adjusted to a greater value and, when the amount of light is great, the degree of amplification (gain) is adjusted to a smaller value. Thus, the output of the autogain circuit is input into a comparator 35 as a signal having a constant amplitude independently of the amount of light. The output of the comparator 35 is input into a differential circuit 20 and a pulse is formed every time the change in the amount of light exceeds a prescribed value. The pulse from the differential circuit 20 is input into a circuit for setting an address and forming a writing pulse 23. An address is formed from the pulse in combination with the value of the counter. The writing pulse formed from the pulse is input into RAM 14.

The position on the line sensor irradiated by rays is latched by the pulse input into a latch circuit 21 and output to RAM 14 from the latch circuit 21. By the treatment described above, the positions on CCD irradiated by rays when D1 to D4 are lighted are regularly memorized in RAM 14.

Whenever necessary, CPU 12 reads the content of RAM 14 and S, C and Ax can be calculated by suitable calculation of the data 9 and data for driving the pulse motor 5b to a suitable position can be prepared.

The array of data written into RAM 14 are read out by CPU 12, ROM 13 and RAM 14a when necessary and various dimensions of a spectacle lens is calculated by a numerical processing circuit 28. The results of the calculation are displayed on a CRT display via a driving circuit 25, where desired, or printed by a printer via a printer driving circuit.

In accordance with the embodiment described above, a rectangular pattern is used and four line sensors arranged in a shape of a cross are used. The position of the pattern is detected in a manner such that the vertical portion of the pattern is detected by the line sensors disposed in the horizontal direction and the horizontal position of the pattern is detected by the line sensors disposed in the vertical direction. Therefore, the calculation is facilitated and the accuracy of detection of the positions can be remarkably improved.

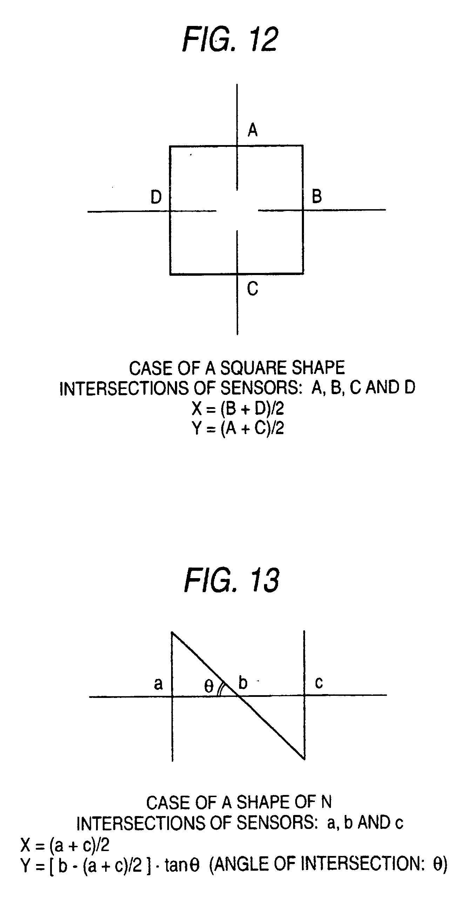

For example, as shown by the equations for deriving the center of the pattern from the coordinates of the intersections of the line sensors and the pattern in Figs. 12 and 13, the calculation can be much simplified by the use of the square pattern described above in comparison with the conventional use of a pattern having the shape of N.

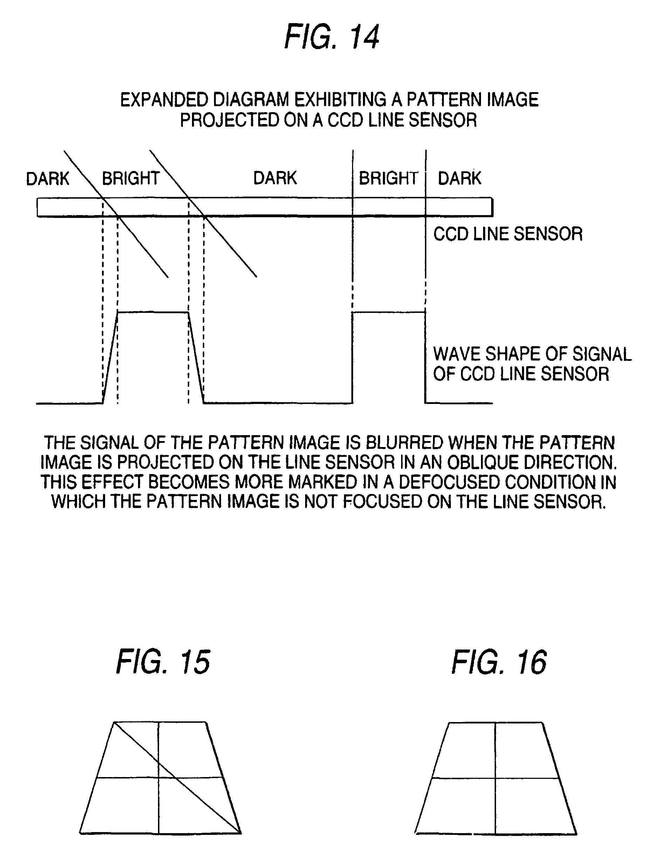

As shown in Fig. 14, for improving the accuracy of detection of the position of intersection of the line sensor and the pattern, the intersection at the right angle shown by the square pattern of the above embodiment is more advantageous in comparison with the oblique intersection in the conventional case of the pattern having the shape of N.

Moreover, an optical system such as the optical system for projecting a pattern always has some degree of aberration. In general, the degree of aberration increases as the distance from the optical center increases. For example, in cases in which an image of a pattern which should be a square is distorted into a trapezoid as shown in Figs. 15 and 16 may be considered. When a pattern having a shape of N is used as shown in Fig. 15, a great error arises in the Y-coordinate. In contrast, when a square pattern such as the pattern in the above embodiment is used as shown in Fig. 16, the error can be made very small.

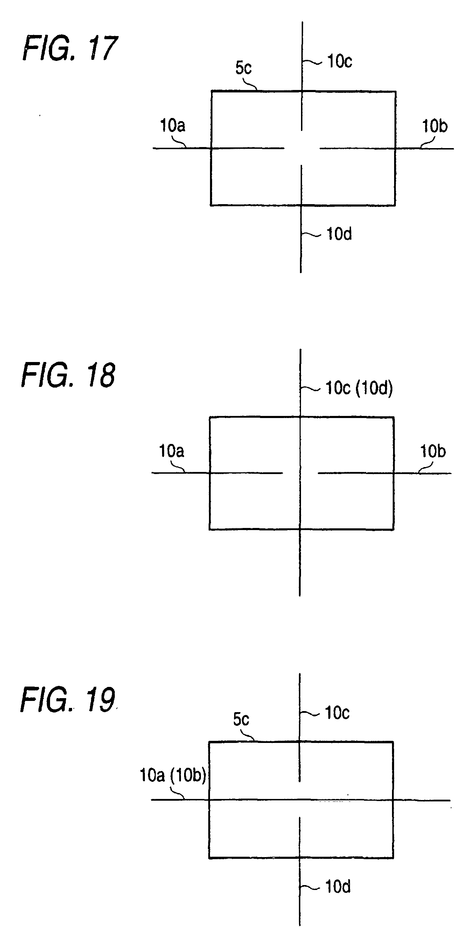

In the above embodiment, the pattern formed in the pattern creating member has a shape of a square and the four line sensors are arranged in the shape of a cross. The pattern may have a rectangular shape as shown in Fig. 17. The line sensors may be arranged in a manner such that two line sensors disposed on either the vertical line or the horizontal line forming the shape of a cross are connected to each other to form a single line sensor as shown in Figs. 18 and 19.

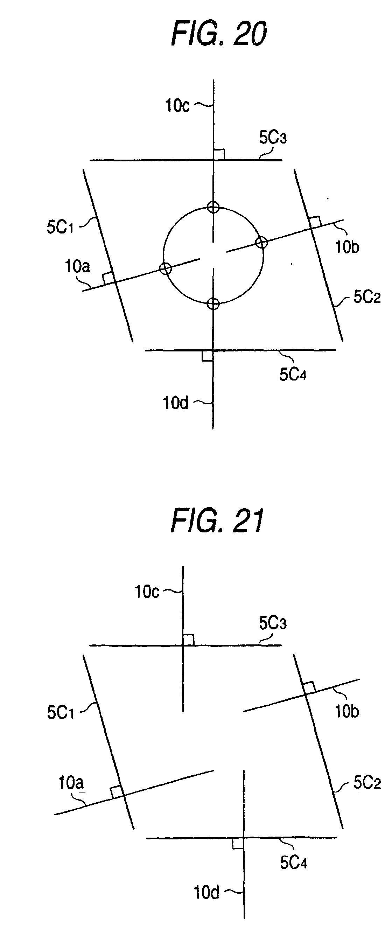

As shown in Fig. 20, the pattern may have a shape of a parallelogram rather than the shape of a rectangle.

It is not necessary that the four sides of the parallelogram are continuously connected to each other. In other words, sides adjacent to each other may be separated from each other. Two line sensors may be disposed on each of two lines forming a cross which intersect each other at a desired angle which is not the right angle. In this case, it is desirable that each side of the pattern and the line sensor intersecting this side intersect each other at the right angle. As shown in Fig. 21, it is not always necessary that the two line sensors in the vertical direction or in the horizontal direction are disposed on the same line.

The effect obtained by the Invention

As described above in detail, the present invention provides an automatic lens meter comprising an optical system in which a pattern image is formed by projection of a pattern created in a pattern creating member and measuring optical properties of a lens for examination based on information on displacement of the pattern image from a position in absence of a lens for examination in a path of rays in the optical system to a position in presence of a lens for examination in the path of rays. The pattern creating member is constituted so that a pattern image of a pattern having a quadrangular shape is formed on the pattern image forming plane. The line sensors are arranged so as to intersect the four sides of the pattern having a quadrangular shape on the same plane as the pattern image forming plane. Information on the displacement of the pattern image is obtained from the information on the positions of the intersections of the line sensors and the four sides of the image of the pattern having a quadrangular shape. The automatic lens meter thus obtained has a simple structure and provides excellent accuracy.

Reference signs

| | |
|---|---|
| 1: | A lens meter; |
| 3: | LED; |
| 4: | A light transfer lens; |
| 5: | A pattern creating member; |
| 5a: | A slit pattern; |
| 5b: | A pulse motor; |
| 5c: | A pattern image; |
| 6: | A collimator; |
| 7: | A lens for examination; |
| 8: | A measurement table; |
| 9: | An object lens; |
| 10: | An image sensor; |
| 30: | A control portion; and |
| 31: | A display portion. |

**Claims**

**1.** An automatic lens meter (1) comprising an optical system (2) arranged for forming a pattern image by projection of a pattern (5a) created in a pattern creating member (5) and for measuring optical properties of a lens (7) for examination based on information on displacement of the pattern image from a position in absence of the lens (7) for examination in a path of rays in the optical system (2) to a position in presence of the lens (7) for examination in the path of rays, the automatic lens meter (1) comprising:

a plurality of light sources (3a, 3b, 3c, 3d) arranged at positions separated from an optical axis of the optical system by a same distance on a plane perpendicular to the optical axis,
a light transfer lens (4) which is disposed in a manner such that an optical axis thereof is a same as the optical axis of the optical system (2) and so that it arranges rays from the light sources (3a, 3b, 3c, 3d) into parallel rays,
a measurement table (8) on which the lens (7) for examination is disposed in a path of rays from the light transfer lens (4),
a collimator lens (6) arranged so that through it, in use, rays from the light transfer lens (4) pass and form images of the plurality of light sources (3a, 3b, 3c, 3d) on the lens (7) for examination disposed on the measurement table (8),
the pattern creating member (5) disposed between the light transfer lens (4) and the collimator lens (6),

an object lens (9) for receiving rays and arranged for forming the pattern image of the pattern created by the pattern creating member (5) on a specific pattern image forming plane, and

line sensors(10) arranged on the pattern image forming plane, wherein the lens meter is arranged so that, in use, the pattern image is formed as a tetragonal shape on the pattern image forming plane from the pattern created in the pattern creating member (5), and wherein

the line sensors (10) are arranged so as to intersect four sides of the tetragonal shape of the pattern image on a same plane as the pattern image forming plane, and wherein the lens meter is further arranged so that, in use,

the information on displacement of the pattern image is derived from information on positions of intersections of the line sensors (10) and the four sides of the tetragonal shape of the pattern image.

2. An automatic lens meter according to claim 1, wherein the plurality of light sources (3a, 3b, 3c, 3d) comprises four light emitting elements disposed at apices of a square.

3. An automatic lens meter according to any one of claims 1 and 2, wherein the line sensors (10a, 10b, 10c, 10d) are arranged in a shape of a cross having a center at the optical axis on the pattern image forming plane.

4. An automatic lens meter according to any one of claims 1, 2 and 3, wherein the pattern creating member (5) is formed for creating a pattern having a shape of a square or a rectangle.

5. An automatic lens meter according to any one of claims 1, 2, 3 and 4, wherein the pattern creating member (5), disposed between the light transfer lens (4) and the collimator lens (6), is formed for moving in a direction of the optical axis.

**Patentansprüche**

1. Automatischer Linsenmesser (1), mit einem optischen System (2), welches angeordnet zum Bilden eines Muster-Bildes durch Projektion ist, eines in einem Muster-Erzeuge-Element (5) erzeugten Musters (5a) und zum Messen optischer Eigenschaften einer zu untersuchenden Linse (7), basierend auf Informationen, welche einen Versatz des Muster-Bildes von einer Position in Abwesenheit der zu untersuchenden Linse (7) in einem Strahlengang optischen System (2) zu einer Position in Anwesenheit der zu untersuchenden Linse (7) in dem Strahlengang betreffen, wobei der automatische Linsenmesser (1) enthält:

eine Mehrzahl von Lichtquellen (3a, 3b, 3c, 3d), welche an von einer optischen Achse des optischen Systems mit einem gleichen Abstand getrennten Positionen in einer Ebene senkrecht zu der optischen Achse angeordnet sind,

eine Licht-Transfer-Linse (4), welche in einer solchen Weise angeordnet ist, dass ihre optische Achse mit der optischen Achse des optischen Systems (2) übereinstimmt, und derart, dass sie Strahlen von den Lichtquellen (3a, 3b, 3c, 3d) in parallele Strahlen anordnet,

einen Mess-Tisch (8), auf welchem die zu untersuchende Linse (7) in einem Strahlengang der Licht-Transfer-Linse (4) angeordnet ist,

eine Kollimator-Linse (6), welche derart angeordnet ist, dass durch sie, in Verwendung, Strahlen von der Licht-Transfer-Linse (4) hindurchtreten und Bilder von der Mehrzahl von Lichtquellen (3a, 3b, 3c, 3d) auf der auf dem Mess-Tisch (8) angeordneten zu untersuchenden Linse (7) bilden,

wobei die Muster-Erzeuge-Vorrichtung (5) zwischen der Licht-Transfer-Linse (4) und der Kollimator-Linse (6) angeordnet ist,

eine Objektiv-Linse (9) zum Empfangen von Strahlen und welche angeordnet ist, zum Bilden des Muster-Bildes des von der Muster-Erzeuge-Vorrichtung (5) erzeugten Musters in einer speziellen Muster-Bild-Bildungs-Ebene und

in der Muster-Bild-Bildungs-Ebene angeordnete Zeilen-Sensoren (10), wobei der Linsenmesser derart angeordnet ist, dass in Verwendung das aus dem im Muster-Erzeuge-Element (5) erzeugte Muster gebildete Muster-Bild als eine tetragonale Form in der Muster-Bild-Bildungs-Ebene ausgebildet ist, und wobei die Zeilen-Sensoren (10) derart angeordnet sind, dass sie vier Seiten der Tetragonal-Form des Muster-Bildes in einer mit der Muster-Bild-Bildungs-Ebene übereinstimmenden Ebene schneiden, und wobei der Linsenmesser ferner derart angeordnet ist, dass in Verwendung die einen Versatz des Muster-Bildes betreffende Information aus Information abgeleitet ist, welche Positionen von Schnitten der Zeilen-Sensoren (10) und der vier Seiten der Tetragonal-Form des Muster-Bildes betrifft.

2. Automatischer Linsenmesser nach Anspruch 1, wobei die Mehrzahl von Lichtquellen (3a, 3b, 3c, 3d) vier in Ecken eines Quadrates angeordnete Licht-Emissions-Elemente enthält.

3. Automatischer Linsenmesser nach einem der Ansprüche 1 und 2, wobei die Zeilen-Sensoren (10a, 10b, 10c, 10d) in einer Form eines Kreuzes angeordnet sind, welches ein Zentrum auf der optischen Achse in der Muster-Bild-Bildungs-Ebene aufweist.

4. Automatischer Linsenmesser nach einem der Ansprüche 1, 2 und 3, wobei das Muster-Erzeuge-Element (5) zum Erzeugen eines Musters, welches eine Form eines Quadrates oder eines Rechtecks aufweist, ausgebildet ist.

5. Automatischer Linsenmesser nach einem der Ansprüche 1, 2, 3 und 4, wobei das zwischen der Licht-Transfer-Linse (4) und der Kollimator-Linse (6) angeordnete Muster-Erzeuge-Element (5) zum Bewegen in einer Richtung der optischen Achse ausgebildet ist.

**Revendications**

1. Mesureur de lentille automatique (1) comprenant un système optique (2) agencé pour former une image de modèle par projection d'un modèle (5a) créé dans un élément de création de modèle (5) et pour mesurer des propriétés optiques d'une lentille (7) à examiner sur la base d'une information sur le déplacement de l'image de modèle à partir d'une position en absence de la lentille (7) à examiner dans un trajet de rayons dans le système optique (2) vers une position en présence de la lentille (7) à examiner dans le trajet de rayons, le mesureur de lentille automatique (1) comprenant :

    une pluralité de sources lumineuses (3a, 3b, 3c, 3d) agencées en des positions séparées d'un axe optique du système optique par une distance identique sur un plan perpendiculaire à l'axe optique,
    une lentille de transfert de lumière (4) qui est disposée d'une façon telle qu'un axe optique de celle-ci soit le même que l'axe optique du système optique (2) et de sorte qu'elle agence des rayons en provenance des sources lumineuses (3a, 3b, 3c, 3d) en rayons parallèles,
    une table de mesure (8) sur laquelle la lentille (7) à examiner est disposée dans un trajet de rayons en provenance de la lentille de transfert de lumière (4),
    un collimateur (6) agencé de sorte qu'à travers lui, lors de l'utilisation, des rayons en provenance de la lentille de transfert de lumière (4) passent et forment des images de la pluralité de sources lumineuses (3a, 3b, 3c, 3d) sur la lentille (7) à examiner disposée sur la table de mesure (8),
    l'élément de création de modèle (5) étant disposé entre la lentille de transfert de lumière (4) et la lentille du collimateur (6),
    un objectif (9) pour recevoir des rayons et agencé pour former l'image de modèle du modèle créé par l'élément de création de modèle (5) sur un plan de formation de l'image de modèle spécifique, et
    des détecteurs linéaires (10) agencés sur le plan de formation de l'image de modèle, dans lesquels le mesureur de lentille est agencé de sorte que, lors de l'utilisation, l'image de modèle soit formée sous forme quadratique sur le plan de formation de l'image de modèle à partir du modèle créé dans l'élément de création de modèle (5), et dans lesquels les détecteurs linéaires (10) sont agencés de façon à couper quatre côtés de la forme quadratique de l'image de modèle sur un même plan que le plan de formation de l'image de modèle, et
    dans lequel le mesureur de lentille est en outre agencé de sorte que, lors de l'utilisation, l'information sur le déplacement de l'image de modèle soit dérivée à partir de l'information sur des positions d'intersections des détecteurs linéaires (10) et des quatre côtés de la forme quadratique de l'image de modèle.

2. Mesureur de lentille automatique selon la revendication 1, dans lequel la pluralité de sources lumineuses (3a, 3b, 3c, 3d) comprend quatre éléments électroluminescents disposés aux sommets d'un carré.

3. Mesureur de lentille automatique selon l'une quelconque des revendications 1 et 2, dans lequel les détecteurs linéaires (10a, 10b, 10c, 10d) sont agencés en forme de croix dont le centre se trouve au niveau de l'axe optique sur le plan de formation de l'image de modèle.

4. Mesureur de lentille automatique selon l'une quelconque des revendications 1, 2 et 3, dans lequel l'élément de création de modèle (5) est formé pour créer un modèle ayant une forme de carré ou de rectangle.

5. Mesureur de lentille selon l'une quelconque des revendications 1, 2, 3 et 4, dans lequel l'élément de création de modèle (5), disposé entre la lentille de transfert de lumière (4) et la lentille du collimateur (6), est formé pour se déplacer dans une direction de l'axe optique.

## FIG. 1

31 DISPLAY PORTION

32 SWITCH OPERATION PORTION

10

9

7

8

6

2

5

5b

4

3 LIGHT SOURCE

PRINTER

30

15: CONTROL BASE BOARD
  12: CPU
  13: ROM
  14: RAM
24: SIGNAL PROCESSING CIRCUIT
  16: CLOCK GENERATING CIRCUIT
  17: CCD DRIVING CIRCUIT
  18: PEAK HOLD CIRCUIT
  19: AUTOGAIN CIRCUIT
  20: DIFFERENTIAL CIRCUIT
  21: LATCH CIRCUIT
  22: COUNTER CIRCUIT
  ·23: CIRCUIT FOR SETTING AN ADDRESS
      AND FORMING A WRITING PULSE
25: DISPLAY DRIVING CIRCUIT
26: LIGHT SOURCE DRIVING CIRCUIT
27: PULSE MOTOR DRIVING CIRCUIT
28: NUMERICAL PROCESSING CIRCUIT
29: PRINTER DRIVING CIRCUIT

POWER SOURCE 11

1

## FIG. 2

## FIG. 3

*FIG. 4*

*FIG. 5*

FIG. 6

FIG. 7

FIG. 8

FIG. 9

FIG. 10

LIGHT SOURCE IMAGE

## FIG. 11

EP 1 231 460 B1

## FIG. 12

CASE OF A SQUARE SHAPE
INTERSECTIONS OF SENSORS: A, B, C AND D
$$X = (B + D)/2$$
$$Y = (A + C)/2$$

## FIG. 13

CASE OF A SHAPE OF N
INTERSECTIONS OF SENSORS: a, b AND c
$$X = (a + c)/2$$
$$Y = [\, b - (a + c)/2 \,] \cdot \tan\theta \quad (\text{ANGLE OF INTERSECTION: } \theta)$$

# FIG. 14

EXPANDED DIAGRAM EXHIBITING A PATTERN IMAGE
PROJECTED ON A CCD LINE SENSOR

DARK  BRIGHT  DARK  BRIGHT  DARK

CCD LINE SENSOR

WAVE SHAPE OF SIGNAL
OF CCD LINE SENSOR

THE SIGNAL OF THE PATTERN IMAGE IS BLURRED WHEN THE PATTERN
IMAGE IS PROJECTED ON THE LINE SENSOR IN AN OBLIQUE DIRECTION.
THIS EFFECT BECOMES MORE MARKED IN A DEFOCUSED CONDITION IN
WHICH THE PATTERN IMAGE IS NOT FOCUSED ON THE LINE SENSOR.

# FIG. 15

# FIG. 16

*FIG. 17*

*FIG. 18*

*FIG. 19*

## FIG. 20

## FIG. 21